# EUROPÄISCHE PATENTSCHRIFT

(11) **EP 0 688 966 B1**
(45) Veröffentlichungstag und Bekanntmachung des Hinweises auf die Patenterteilung: **09.09.1998**
(21) Anmeldenummer: 95108438.3
(22) Anmeldetag: 01.06.1995
(51) Int. Cl.: F16B 39/282

(54) **Befestigungselement z.B. Schraube oder Mutter**
Fixing device such as screw or nut
Elément de fixation tel que vis ou écrou

(30) Priorität: 20.06.1994 DE 9409955 U
(43) Veröffentlichungstag der Anmeldung: 27.12.1995
(73) Patentinhaber: EJOT VERBINDUNGSTECHNIK GmbH & Co. KG, D-57334 Bad Laasphe (DE)
(72) Erfinder: König, Gottfried, D-57334 Bad Laasphe (DE)
(74) Vertreter: Bardehle, Heinz, Dipl.-Ing.

(56) Entgegenhaltungen:
- DE-A- 2 724 626
- GB-A- 1 022 633
- LU-A- 37 143
- US-A- 1 894 708
- US-A- 3 640 326

## Beschreibung

Die Erfindung bezieht sich auf ein mit einem Gewinde versehenes Befestigungselement, z.B. Schraube oder Mutter, das durch Verdrehen in Anzugsrichtung mit einer Stirnfläche gegen ein Werkstück gedrückt wird, wobei von der Stirnfläche mit Schneiden versehene, rippenartige Vorsprünge abstehen, die im Bereich der Stirnfläche einen Abstand voneinander einhalten.

Zu einem derartigen Befestigungselement existiert ein umfangreicher Stand der Technik. In diesem Zusammenhang sei zunächst auf die EP-A-0 051 013 verwiesen, in der eine Schraube offenbart ist, deren eine dem Werkstück zugewandte Stirnfläche ihres Schraubenkopfes mit über die Stirnfläche verteilten, mit Abstand voneinander angeordneten Rippen versehen ist. Diese Rippen, die etwa in tangentialer Richtung zum Durchmesser des Schraubenschaftes verlaufen, also gegenüber der Radialrichtung geneigt sind, besitzen über den größten Teil ihrer Länge gleichbleibende Breite. Nur im inneren Bereich nimmt ihre Breite nach außen hin zu. Die Rippen sind mit längs der Rippen verlaufenden Schneiden versehen, die seitlich derart an den Rippen angeordnet sind, daß die Schneiden ein Rückdrehen einer angezogenen Schraube verhindern. Eine ähnliche Gestaltung ist in der DE -A-1 090 468 offenbart, die sich ebenfalls auf eine Schraube mit einer Stirnfläche an ihrem Schraubenkopf bezieht, in welcher Stirnfläche schräg zur Radialrichtung verlaufende einzelne, mit Schneiden versehene Rippen angeordnet sind. Die Rippen besitzen eine kreisabschnittartige Grundfläche, d.h. nach außen hin nimmt ihre Breite zunächst zu und danach wieder ab. Auch diese Rippen sind hier mit einer Schneide versehen, die ein Rückdrehen der angezogenen Schraube verhindern soll.

Eine in der praktischen Anwendung besonders bekannt gewordene Gestaltung besteht darin, die Stirnfläche eines Schraubenkopfes mit radial nach außen verlaufenden, aneinander anschließenden Rippen mit je einer Schneide zu versehen, durch die das Rückdrehen der angezogenen Schraube verhindert werden soll. Entsprechende Ausführungsformen zeigen die DE -B- 1 750 063, die DE -A- 2 308 557 und die DE -C- 25 56 985. Diesen drei Ausführungsformen ist gemeinsam, daß wegen der radialen Erstreckung der Rippen und deren in Umfangsrichtung lückenloser Aufeinanderfolge die Rippen nach außen hin hinsichtlich ihrer Breite zunehmen. In der US-A-3 640 326 ist weiterhin eine Schraube offenbart, deren Schraubenkopf mit radialen Rippen versehen ist, deren Grund von aussen nach innen breiter wird, deren Höhe von aussen nach innen zunimmt und die anstelle einer Schneide eine radiale Abflachung besitzen. Weiterhin sei auf die GB-A- 1 022 633 verwiesen, die eine Schraube mit Schraubenkopf zeigt, der auf seiner dem Schraubenschaft zugewandten Seite konkav geformt ist. Dabei ergeben sich wegen eines Sechskants am Kopf jeweils 6 einzelne Spitzen, die der elektrischen Kontaktgabe dienen.

Bei den vorstehend genannten Befestigungselementen muß es sich um ein Massenprodukt handeln, wenn es für seine Verarbeitung überhaupt angenommen wird. Dies bedingt eine einfache und rationelle Herstellung, für die in der Regel nur das Stauchen des Schraubenkopfes in Frage kommt, wobei die Rippen mit ausgeformt werden müssen. Hierbei ist es erforderlich, daß das Material der Rippen wegen deren Erhabenheit gegenüber der Stirnfläche in entsprechende Ausnehmungen des Formwerkzeugs einfließen muß, was insbesondere bei zunehmend verlangten nichtrostenden Schrauben problematisch ist.

Der Erfindung liegt die Aufgabe zugrunde, das eingangs erläuterte Befestigungselement so zu gestalten, daß es eine besonders günstige Form für den vorstehend erwähnten Stauchungsprozess besitzt, um dabei auch scharfkantige Schneiden erzeugen zu können. Erfindungsgemäß geschieht dies dadurch, daß die Vorsprünge in Radialrichtung nach außen unter Zunahme ihrer Höhe eine durchgehend abnehmende Breite aufweisen und in einer in Umfangsrichtung verlaufenden Schneide enden.

Mit dieser Form der rippenartigen Vorsprünge wird von der bisher üblichen Gestaltung rippenartiger Vorsprünge an Stirnflächen von Befestigungselementen grundsätzlich abgegangen, da nämlich umgekehrt zu den bisherigen Gestaltungen den Vorsprüngen die nach außen hin durchgehend abnehmende Breite gegeben wird, die ein Einfließen des Materials des zu stauchenden Schraubenkopfes in die betreffenden Ausnehmungen des Formwerkzeugs entscheidend erleichtert. Das Material fließt nämlich in eine enger werdende Ausnehmung hinein, was den Materialfluß wesentlich erleichtert, weil dieser im wesentlichen aus dem inneren Bereich des auszuformenden Schraubenkopfes kommt und im wesentlichen in radialer Richtung von innen nach außen verläuft. Dem gegenüber stellen rippenartige Vorsprünge mit irgendwelchen Erweiterungen ihrer Breite oder ihres Querschnittes für diesen Materialfluß ein erhebliches Problem dar, was durch entsprechend hohe Drücke beim Stauchen gelöst werden muß. Die Folge davon ist hoher Werkzeugverschleiß, außerdem kann durch den erschwerten Materialfluß die Scharfkantigkeit der an den Rippen zu erzeugenden Schneiden nicht ohne weiteres garantiert werden.

Die in Umfangsrichtung verlaufenden Schneiden drücken sich beim Anziehen des Befestigungselementes zunehmend gegen das Werkstück und drücken dabei Verschmutzungen, Lackierungen oder dergleichen zur Seite, da sie die Belege zerschneiden, was durch die Umfangsrichtung der Schneiden begünstigt wird, weil die Schneiden diese Wirkung über einen dem Anziehen entsprechenden Weg hervorrufen. Dies läßt sich dazu ausnutzen, eine gute elektrische Kontaktgabe von dem Befestigungselement zu einem Werkstück herbeizuführen.

Die in Umfangsrichtung verlaufenden Schneiden kann man so gestalten, daß sie parallel zur Stirnfläche verlaufen oder ihre Höhe in Anzugsrichtung zunimmt oder abnimmt. Hierdurch wird die auf das Werkstück ausgeübte oben erwähnte Schneidwirkung entsprechend variiert.

Darüberhinaus ist es auch möglich, die Schneiden so zu gestalten, daß diese im mittleren Bereich ihre größte oder geringste Höhe besitzen. Im ersteren Falle ergibt sich eine mehr punktuelle Anlage der Schneiden am Werkstück. Im letzteren Falle drücken die Schneiden mit je zwei Punkten gegen das Werkstück.

Im Falle der Gestaltung der Vorsprünge in der Weise, daß ihre Breite etwa ihrer Länge entspricht, kann man die Vorsprünge zweckmäßig so gestalten, daß die Zunahme ihrer Höhe von innen her bis zur Schneide im radialen Schnitt konkav verläuft. In diesem Falle ergibt sich von innen her bis zur Schneide eine stetige Zunahme der Steigung der Vorsprünge, was für das Einfließen des Materials in die betreffende Ausnehmung des Formwerkzeugs günstig ist.

Die Schneiden auf den einzelnen Vorsprüngen kann man so gestalten, daß die größte Höhe der Schneiden ein geringfügig unterschiedliches Maß besitzt. Dies bedeutet, daß von Vorsprung zu Vorsprung jeweils auf eine höhere Schneide eine tiefere Schneide und danach wieder eine höhere Schneide folgt und so fort. Es handelt sich dabei um Höhenunterschiede in der Größenordnung von wenigen 1/10 mm. Diese Gestaltung führt dazu, daß sich durch die höheren Rippen eine entsprechend hohe Flächenpressung ergibt, die beim Anziehen des Befestigungselementes zu einer schnellen intensiven Reinigung der Gegenfläche führt, wobei sich die höheren Schneiden abnutzen und schließlich auch die tieferen Schneiden zur Wirkung kommen.

Eine weitere Ausführungsform, die vor allem eine günstige Gestaltung des die Vorsprünge ausbildenden Formwerkzeuges berücksichtigt, besteht darin, die Vorsprünge so zu gestalten, daß diese Seitenwände besitzen, die benachbarte Vorsprünge als radial nach innen verlaufender Bogen verbinden, wobei die Vorsprünge an ihrem äußeren Ende steil zur Stirnfläche unter Bildung einer in Umfangsrichtung verlaufenden Schneide abfallen. Die Wirkung der Vorsprünge konzentriert sich dabei auf deren äußere Enden, wo diese die in Umfangsrichtung verlaufenden Schneiden bilden. In diesem Bereich kann sich die Wirkung der Schneiden gegenüber einem Werkstück besonders intensiv auswirken. Unterstützt wird die Schneidenwirkung dadurch, daß man die Vorsprünge so gestaltet, daß der Bereich der Vorsprünge neben den Seitenwänden radial nach innen hinsichtlich seiner Höhe abnimmt.

In den Figuren sind Ausführungsbeispiele der Erfindung dargestellt. Es zeigen
- Figur 1: die Ansicht eines Schraubenkopfes mit Blickrichtung auf die dem Werkstück zugewandte Stirnfläche mit Vorsprüngen, deren Breite etwa der Länge entspricht und mit in Umfangsrichtung verlaufenden Schneiden,
- Figur 2: einen axialen Schnitt durch einen Schraubenkopf gemäß Figur 1 mit konkav verlaufendem Vorsprung,
- Figur 3: eine ähnliche Ausführungsform wie diejenige gemäß Figur 2 allerdings mit geringerer Schneidenhöhe,
- Figur 4: die gleiche Schraube wie Figur 1 in Seitensicht, die eine in Umfangsrichtung verlaufende Schneide zeigt, die parallel zur Stirnfläche verläuft,
- Figur 5 und 6: Varianten zur Ausführungsform gemäß Figur 4 mit schräg zur Stirnfläche verlaufenden Schneiden,
- Figuren 7 und 8: weitere Varianten zu Figur 4 mit Schneiden mit unterschiedlichem Höhenverlauf,
- Figur 9: eine weitere Ausführungsform mit Verbindung benachbarten Vorsprünge durch Bögen,
- Figur 10: die gleiche Ausführungsform als Schnitt entlang der Linie E-F aus Fig. 9,
- Fig. 11: eine Seitenansicht des Schraubenkopfes gemäß Fig. 9.

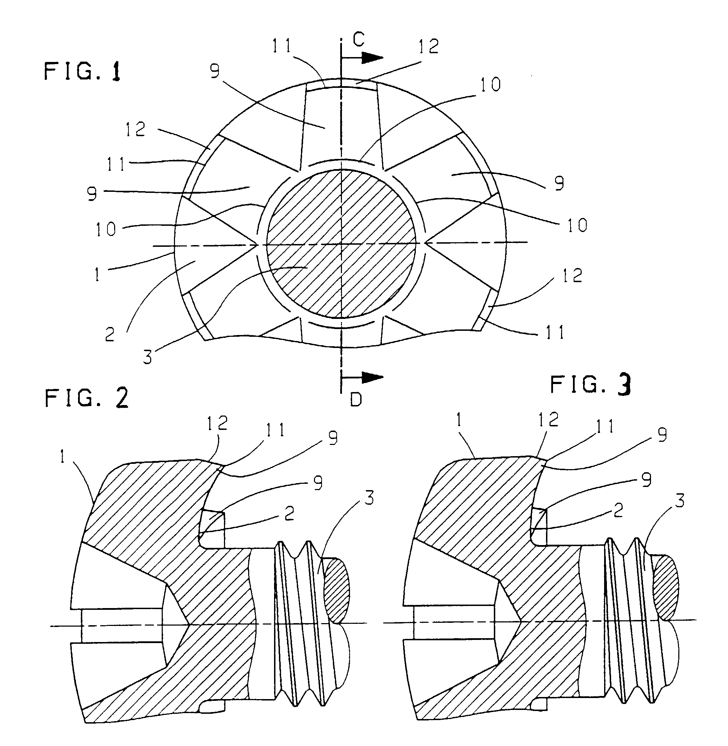

Figur 1 zeigt einen Schraubenkopf 1 mit seiner Stirnfläche 2 und den im Schnitt gezeichneten Schraubenschaft 3. Auf der Stirnfläche 2 sind die Vorsprünge 9 angeordnet, die kleine Blöcke bilden, deren Breite etwa deren Länge entspricht. Die Vorsprünge 9 wachsen von ihrem inneren Rand 10 her aus der Stirnfläche 2 heraus und erreichen schließlich die Schneiden 11, die sich hier im äußeren Bereich der Vorsprünge 9 befinden. Danach fallen die Vorsprünge 9 steil über die Außenflächen 12 bis zur Höhe der Stirnfläche 2 ab.

Figuren 2 und 3 zeigen jeweils einen Schnitt längs der Linie C-D aus Figur 1, wobei allerdings eine gegenüber der Stirnfläche 2 unterschiedliche Höhe der betreffenden Schneiden 11 vorgesehen ist. Wie ersichtlich steigt der Vorsprung 9 jeweils mit zunehmender Steilheit nach außen hin von der Stirnfläche 2 her an, bis er schließlich die Schneide 11 erreicht. Es liegt somit ein im radialen Schnitt konkaver Verlauf des Vorsprunges 9 vor.

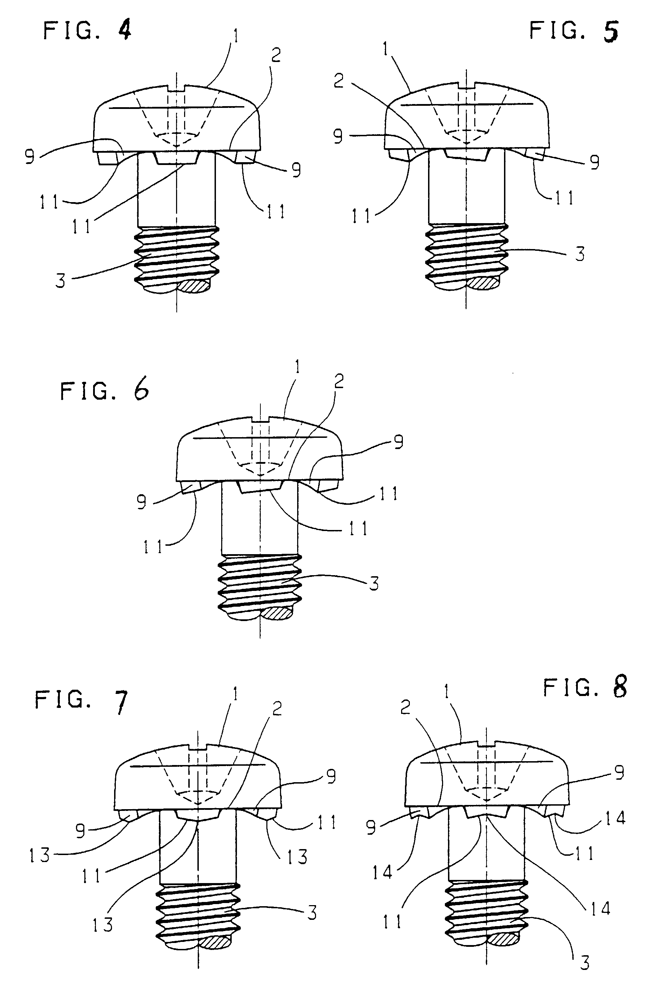

In den Figuren 4 bis 8 sind verschiedene Varianten der Gestaltung der Schneide 11 dargestellt. Dabei handelt es sich jeweils um eine Seitenansicht der Schraube gemäß Figur 1, wobei lediglich die jeweilige Schneide 11 anders verläuft. Gemäß Figur 4 verläuft die Schneide 11 parallel zur Stirnfläche 2. Bei den Ausführungsformen gemäß Figuren 5 und 6 verläuft die Schneide 10 schräg zur Stirnfläche 2, wobei je nach Anzugsrichtung die Höhe der Schneide 11 zunimmt bzw. abnimmt.

In den Figuren 7 und 8 sind weitere Varianten des Verlaufs der Schneide 11 dargestellt. Bei der Ausführungsform gemäß Figur 7 besitzt die Schneide 11 im mittleren Bereich des Vorsprungs 9 ihre größte Höhe, nämlich im Punkt 13. Bei der Ausführungsform gemäß Figur 8 besitzt die Schneide 11 im mittleren Bereich des Vorsprungs 9 ihre geringste Höhe, nämlich im Punkt 14.

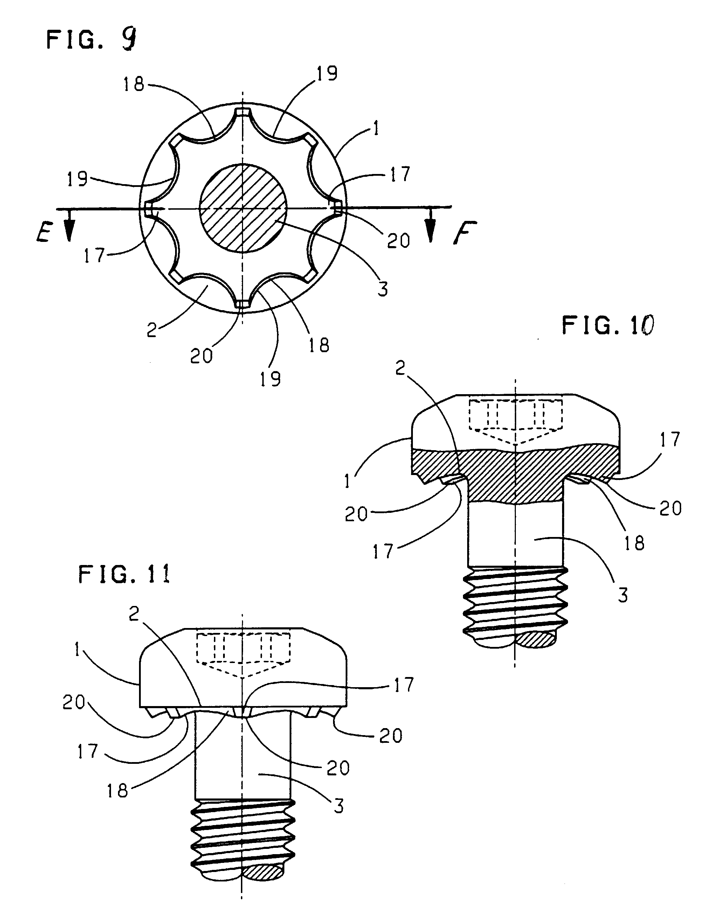

In den Figuren 9 bis 11 ist eine weitere Ausführungsform des erfindungsgemäßen Befestigungselements dargestellt, bei dem die Stirnfläche 2 des Schraubenkopfes 1 mit Vorsprüngen 17 versehen ist, die hier dadurch mit nach außen hin durchgehend abnehmender Breite gestaltet sind, daß die Vorsprünge 17 Seitenwände 18 besitzen, die benachbarte Vorsprünge 17 als nach innen verlaufender Bogen 19 verbinden. Es ergeben sich dadurch relativ kurze, aber intensiv wirksame Vorsprünge 17, die sich mit ihrer Schneide 20 in das Gegenmaterial eines Werkstücks eindrücken lassen. Die Schneiden 20 werden dadurch gebildet, daß die Vorsprünge 17 an ihrem äußeren Ende steil zur Stirnfläche 2 abfallen. Für die Bildung der Schneiden 20 ist weiterhin bedeutsam, daß der Bereich der Vorsprünge 17 neben den Seitenwänden 18 radial nach innen hinsichtlich ihrer Höhe abnehmen, was besonders deutlich aus dem Schnitt gemäß Figur 10 und der Seitenansicht gemäß Figur 11 ersichtlich ist. Der genannte Bereich verläuft dabei konkav, was der Bildung der Schneiden 20 zugute kommt. Es ist aber auch möglich, den genannten Bereich flach zu gestalten, so daß sich damit eine Konusfläche mit einem großen stumpfen Winkel ergibt.

Bei den Ausführungsbeispielen gemäß den Figuren 1 bis 8 handelt es sich um eine Gestaltung der Vorsprünge, bei der deren Breite etwa deren Länge enspricht.

## Patentansprüche

1. Mit einem Gewinde versehenes Befestigungselement, z.B. Schraube oder Mutter, das durch Verdrehen in Anzugsrichtung mit einer Stirnfläche (2) gegen ein Werkstück gedrückt wird, wobei von der Stirnfläche (2) mit Schneiden (11, 20) versehene, rippenartige Vorsprünge (9, 17) abstehen, die im Bereich der Stirnfläche (2) einen Abstand voneinander einhalten, **dadurch gekennzeichnet,** daß die Vorsprünge (9, 17) in Radialrichtung nach außen unter Zunahme ihrer Höhe eine durchgehend abnehmende Breite aufweisen und in einer in Umfangsrichtung verlaufenden Schneide (11, 20) enden.

2. Befestigungselement nach Anspruch 1, dadurch gekennzeichnet, daß die Schneiden (11) parallel zur Stirnfläche (2) verlaufen.

3. Befestigungselement nach Anspruch 1, dadurch gekennzeichnet, daß die Höhe der Schneiden (11) in Anzugsrichtung zunimmt.

4. Befestigungselement nach Anspruch 1, dadurch gekennzeichnet, daß die Höhe der Schneiden (11) in Anzugsrichtung abnimmt.

5. Befestigungselement nach Anspruch 1, dadurch gekennzeichnet, daß die Schneiden (11) im mittleren Bereich (13) der Vorsprünge (9) ihre größte Höhe besitzen.

6. Befestigungselement nach Anspruch 1, dadurch gekennzeichnet, daß die Schneiden (11) im mittleren Bereich (14) der Vorsprünge (9) ihre geringste Höhe besitzen.

7. Befestigungselement nach einem der Ansprüche 1 bis 6, dadurch gekennzeichnet, daß die Zunahme der Höhe der Vorsprünge (9) von innen her bis zur Schneide (11) im radialen Schnitt konkav verläuft.

8. Befestigungselement nach einem der Ansprüche 1 bis 7, dadurch gekennzeichnet, daß die größte Höhe der Schneiden (11) abwechselnd ein geringfügig unterschiedliches Maß besitzt.

9. Befestigungselement nach einem der Ansprüche 1 bis 8, dadurch gekennzeichnet, daß die Vorsprünge (17) Seitenwände (18) besitzen, die benachbarte Vorsprünge (17) als radial nach innen verlaufender Bogen (19) verbinden.

## Claims

1. Threaded fastening element, e.g. screw or nut, pressed against a workpiece via an end face (2) by twisting in the direction of tightening, rib-like projections (9, 17) provided with cutting edges (11, 20) extending from the end face (2) and maintaining a distance from one another in the region of the end face (2), characterised in that the projections (9, 17) have a width decreasing continuously radially towards the outside as their height increases and end in a cutting edge (11, 20) extending in the circumferential direction.

2. Fastening element according to claim 1, characterised in that the cutting edges (11) extend parallel to the end face (2).

3. Fastening element according to claim 1, characterised in that the height of the cutting edges (11) increases in the direction of tightening.

4. Fastening element according to claim 1, characterised in that the height of the cutting edges (11) decreases in the direction of tightening.

5. Fastening element according to claim 1, characterised in that the cutting edges (11) have their greatest height in the central region (13) of the projections (9).

6. Fastening element according to claim 1, characterised in that the cutting edges (11) have their smallest height in the central region (14) of the projections (9).

7. Fastening element according to one of claims 1 to 6. characterised in that the increase in the height of the projections (9) extends concavely from the inside to the cutting edge (11) in the radial section.

8. Fastening element according to one of claims 1 to 7, characterised in that the greatest height of the cutting edges (11) is slightly different from one projection to the next.

9. Fastening element according to one of claims 1 to 8, characterised in that the projections (17) have side walls (18) in the form of radially inwardly extending arcs (19) joining adjacent projections (17).

## Revendications

1. Élément de fixation pourvu d'un filetage, par exemple vis ou écrou, et dont la face frontale (2) est pressée contre une pièce par rotation dans le sens de serrage, des saillies en forme de nervures (9, 17) pourvues de tranchants (11, 20) dépassant de la face frontale (2) et définissant entre elles des intervalles dans la zone de la face frontale (2), caractérisé en ce que, dans la direction radiale vers l'extérieur, les saillies (9, 17) présentent une largeur à décroissement progressif associée à un accroissement de leur hauteur et se terminent par un tranchant (11, 20) orienté dans la direction circonférentielle.

2. Élément de fixation selon la revendication 1, caractérisé en ce que les tranchants (11) sont orientés parallèlement à la face frontale (2).

3. Élément de fixation selon la revendication 1, caractérisé en ce que la hauteur des tranchants (11) croît dans le sens de serrage.

4. Élément de fixation selon la revendication 1, caractérisé en ce que la hauteur des tranchants (11) décroît dans le sens de serrage.

5. Élément de fixation selon la revendication 1, caractérisé en ce que les tranchants (11) possèdent leur hauteur maximale dans la zone centrale (13) des saillies (9).

6. Élément de fixation selon la revendication 1, caractérisé en ce que les tranchants (11) possèdent leur hauteur minimale dans la zone centrale (14) des saillies (9).

7. Élément de fixation selon l'une des revendications 1 à 6, caractérisé en ce que, en coupe radiale, l'accroissement de la hauteur des saillies (9) suit un tracé concave de l'intérieur vers le tranchant (11).

8. Élément de fixation selon l'une des revendications 1 à 7, caractérisé en ce que la hauteur maximale des tranchants (11) possède alternativement une valeur légèrement différente.

9. Élément de fixation selon l'une des revendications 1 à 8, caractérisé en ce que les saillies (17) possèdent des parois latérales (18) qui relient des saillies voisines (17) en formant des arcs (19) qui s'étendent radialement vers l'intérieur.
